# EUROPÄISCHE PATENTSCHRIFT

(11) **EP 0 682 692 B1**
(45) Veröffentlichungstag und Bekanntmachung des Hinweises auf die Patenterteilung: **17.09.1997**
(21) Anmeldenummer: 94906158.4
(22) Anmeldetag: 27.01.1994
(51) Int. Cl.: C11D 3/37, C08F 251/00, C08F 220/04

(54) **GERÜSTSTOFF FÜR WASCH- ODER REINIGUNGSMITTEL**
BUILDER FOR DETERGENTS OR CLEANSERS
ADJUVANT POUR DETERGENTS OU NETTOYANTS

(30) Priorität: 05.02.1993 DE 4303448
(43) Veröffentlichungstag der Anmeldung: 22.11.1995
(73) Patentinhaber: Henkel Kommanditgesellschaft auf Aktien, 40191 Düsseldorf (DE)
(72) Erfinder: KOTTWITZ, Beatrix, D-40593 Düsseldorf (DE); POETHKOW, Jorg, D-40229 Düsseldorf (DE); KRINGS, Peter, D-47807 Krefeld (DE); UPADEK, Horst, D-40883 Ratingen (DE)
(86) Internationale Anmeldenummer: EP9400228
(87) Internationale Veröffentlichungsnummer: WO9418295

(56) Entgegenhaltungen:
- EP-A- 0 337 259
- WO-A-94/01476

## Beschreibung

Die Erfindung betrifft ein Wasch- oder Reinigungsmittel, das als Inkrustationsinhibitoren abbaubare polymere Polycarboxylate enthält, einen Gerüststoff für Wasch- oder Reinigungsmittel sowie jeweils Verfahren zur Herstellung des Waschmittels und des Gerüststoffes.

In der Praxis wurden zumeist polymere Polycarboxylate auf Basis homo- und copolymerer Acrylsäure oder Maleinsäure bzw. deren Salzen als Inkrustationsinhibitoren eingesetzt. Insbesondere waren dabei copolymere Salze bevorzugt, die nur aus den Monomeren (Meth)acrylsäure und/oder Maleinsäure aufgebaut sind. Als Nachteil dieser Polymere muß jedoch angesehen werden, daß sie schwer biologisch abbaubar sind.

Die europäische Patentanmeldung EP-A-O 337 259 (BASF) beschreibt ein Verfahren zur Herstellung wasserlöslicher Copolymerisate aus Acrylsäure, Maleinsäureanhydrid und Monosacchariden. Die Copolymerisation dieser Monomeren mit Allylsulfonsäuren beziehungsweise Allylsulfonaten wird weder erwähnt, noch wird sie durch die Druckschrift nahegelegt.

Die Aufgabe der Erfindung bestand deshalb darin, Waschmittel mit sowohl hohem Primär- als auch Sekundärwaschvermögen bereitzustellen, die als Inkrustationsinhibitoren biologisch abbaubare Polymere enthalten.

Gegenstand der Erfindung ist dementsprechend ein Wasch- oder Reinigungsmittel, insbesondere ein Textilwaschmittel, welches (co-)polymere Polycarbonsäuren und/oder Polycarboxylate enthält, wobei das Mittel als copolymere Polycarbonsäure und/oder copolymeres Polycarboxylat ein Terpolymer aus den Monomeren einer monoethylenisch ungesättigten C₃-C₈-Carbonsäure, einer 2-Alkyl-allylsulfonsäure oder 2-Aryl-allylsulfonsäure und einem Kohlenhydrat und/oder den Salzen einer monoethylenisch ungesättigten C₃-C₈-Carbonsäure und einer 2-Alkyl-allylsulfonsäure oder 2-Aryl-allylsulfonsäure sowie einem Kohlenhydrat und außerdem Enzyme enthält.

Die erfindungsgemäß eingesetzten Terpolymeren enthalten eine Carbonsäure, eine Sulfonsäure und/oder deren Salze sowie ein Kohlenhydrat als Monomere. Das erste saure Monomer bzw. dessen Salz leitet sich von einer monoethylenisch ungesättigten C₃-C₈-Monocarbonsäure und vorzugsweise von einer C₃-C₄-Honocarbonsäure, insbesondere von der (Meth-)acrylsäure ab. Das zweite saure Monomer bzw. dessen Salz ist ein Derivat einer Allylsulfonsäure, die in 2-Stellung mit einem Alkylrest, vorzugsweise mit einem C₁-C₄-Alkylrest, oder einem aromatischen Rest, der sich vorzugsweise von Benzol oder Benzol-Derivaten ableitet, substituiert ist. Bevorzugte Terpolymere enthalten dabei 40 bis 60 Gew.-%, insbesondere 45 bis 55 Gew.-% (Meth)acrylsäure bzw. (Meth)acrylat mit besonderer Bevorzugung von Acrylsäure bzw. Acrylat, 10 bis 30 Gew.-%, vorzugsweise 15 bis 25 Gew.-% Methallylsulfonsäure bzw. Methallyl-. sulfonat und als 3. Monomer 15 bis 40 Gew.-%, vorzugsweise 20 bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind. Durch den Einsatz dieses 3. Monomers werden Sollbruchstellen in dem Polymer eingebaut, die für die Abbaubarkeit des Polymers verantwortlich sind. Insbesondere ist als 3. Monomer Saccharose bevorzugt. Die erfindungsgemäß eingesetzten Terpolymere lassen sich nach jedem der bekannten und üblichen Verfahren herstellen.

Dabei werden insbesondere die monomeren Säuren mit dem Kohlenhydrat umgesetzt, woraufhin im Anschluß gegebenenfalls eine Neutralisation der Säuren zu vorzugsweise ihren Alkalisalzen, wie den Natrium- oder Kaliumsalzen, oder Ammoniumsalzen oder Alkanolaminsalzen, wie dem Monoethanolaminsalz oder dem Triethanolaminsalz, durchgeführt wird.

Analog zu den bekannten (co-)polymeren Polycarbonsäuren bzw. Polycarboxylaten wie den homo- oder copolymeren Acrylsäuren bzw. Acrylaten sind auch solche Terpolymere bevorzugt, die entweder vollständig oder zumindest partiell, insbesondere zu mehr als 50 %, bezogen auf die vorhandenen Carboxylgruppen, neutralisiert sind. Besonders bevorzugt ist dabei ein vollständig neutralisiertes Terpolymer, das also aus den Salzen der monomeren Säuren, insbesondere den Natrium- oder Kaliumsalzen der monomeren Säuren, und einem Kohlenhydrat besteht. Die Terpolymeren weisen im allgemeinen eine relative Molekülmasse zwischen 1000 und 200000, vorzugsweise zwischen 2000 und 50000 und insbesondere zwischen 3000 und 10000 auf. Sie werden zumeist in Form wäßriger Lösungen, vorzugsweise in Form 30 bis 50 Gew.-%iger wäßriger Lösungen eingesetzt. Insbesondere bevorzugte Terpolymere werden nach einem Verfahren hergestellt, das in der älteren deutschen Patentanmeldung DE-A-42 21 381 beschrieben ist.

Erfindungsgemäße Mittel enthalten das Terpolymer vorzugsweise in Mengen von 0,5 bis 30 Gew.-% und insbesondere in Mengen von 2 bis 25 Gew.-%. Weiterhin ist es bevorzugt, daß die Mittel außer den Terpolymeren ein oder mehrere Inhaltsstoffe aus der Gruppe der alkalischen anorganischen Salze und üblicherweise in Wasch- oder Reinigungsmitteln eingesetzten Buildersubstanzen enthalten.

Zu den alkalischen anorganischen Salzen gehören die wasserlösliche Bicarbonate, Carbonate, amorphen Silikate oder Mischungen aus diesen; insbesondere werden Alkalicarbonat und Alkalisilikat, vor allem Natriumsilikat mit einem molaren Verhältnis Na₂0 : Si0₂ von 1:1 bis 1:4,5, vorzugsweise von 1:2 bis 1:3,5, eingesetzt. Der Gehalt der Mittel an Natriumcarbonat kann 0 bis etwa 20 Gew.-% betragen, der Gehalt der Mittel an Natriumsilikat beträgt im allgemeinen 0 bis etwa 10 Gew.-%.

Zu den bekannten und üblicherweise in Wasch- oder Reinigungsmitteln eingesetzten Buildersubstanzen gehören in erster Linie Phosphate, Zeolithe und Schichtsilikate, wobei Zeolithe und kristalline Schichtsilikate bevorzugt sind. Der eingesetzte feinkristalline, synthetische und gebundenes Wasser enthaltende Zeolith ist vorzugsweise Zeolith NaA in Waschmittelqualität. Geeignet sind jedoch auch Zeolith NaX sowie Mischungen aus A, X und/oder P. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser. Mengenangaben zu Zeolith beziehen sich, sofern nichts anderes gesagt wird, immer auf den wasserhaltigen Zeolith.

Geeignete Substitute bzw. Teilsubstitute für Phosphate und Zeolithe sind kristalline, schichtförmige Natriumsilikate der allgemeinen Formel (I) NaMSiₓ0₂ₓ₊₁·yH₂0, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilikate werden beispielsweise in der europäischen Patentanmeldung EP-A-0 164 514 beschrieben. Bevorzugte kristalline Schichtsilikate der allgemeinen Formel (I) sind solche, in denen M für Natrium steht und x die Werte 2 oder 3 annimmt. Insbesondere sind sowohl β- als auch δ-Natriumdisilikate Na₂Si₂0₅·yH₂0 bevorzugt, wobei β-Natriumdisilikat beispielsweise nach dem Verfahren erhalten werden kann, das in der internationalen Patentanmeldung W0-A-91/08171 beschrieben ist.

Die erfindungsgemäßen Mittel enthalten vorzugsweise wasserhaltigen Zeolith und/oder kristalline Schichtsilikate in Mengen von 10 bis 65 Gew.-%.

Brauchbare organische Gerüstsubstanzen sind beispielsweise die bevorzugt in Form ihrer Natriumsalze eingesetzten Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Ihr Gehalt in den Mitteln beträgt vorzugsweise 0 bis 20 Gew.-%.

In einer bevorzugten Ausführungsform der Erfindung enthalten die Mittel 0,5 bis 30 Gew.-%, vorzugsweise 2 bis 25 Gew.-% Terpolymer, 0 bis 20 Gew.-%, vorzugsweise 5 bis 15 Gew.-% anorganische Carbonate und 0 bis 20 Gew.-%, vorzugsweise 5 bis 15 Gew.-% Salze organischer Polycarbonsäuren.

In einer weiteren bevorzugten Ausführungsform der Erfindung enthalten die Mittel 10 bis 65 Gew.-% wasserhaltigen Zeolith und/oder kristalline Schichtsilikate und 2 bis 20 Gew.-% Terpolymer aus den Salzen der Acrylsäure und der 2-Methallylsulfonsäure sowie Saccharose.

In einer weiteren bevorzugten Ausführungsform der Erfindung enthalten die Mittel 20 bis 40 Gew.-% Zeolith und/oder kristalline Schichtsilikate, 5 bis 15 Gew.-% Natriumcarbonat, 0 bis 10 Gew.-%, vorzugsweise 2 bis 5 Gew.-% amorphe Silikate und 3 bis 15 Gew.-% Terpolymer.

Ebenso bevorzugt ist eine Ausführungsform der Erfindung, wobei die Mittel Terpolymer und Salze organischer Polycarbonsäuren im Verhältnis 1:4 bis 4:1 enthalten.

Weiterhin können die erfindungsgemäßen Mittel zusätzlich zu dem Terpolymer bekannte und übliche (co-)polymere Polycarboxylate enthalten. Geeignete polymere Polycarboxylate sind beispielsweise die Natriumsalze der Polyacrylsäure oder der Polymethacrylsäure, beispielsweise solche mit einer relativen Molekülmasse von 800 bis 150000 (auf Säure bezogen). Geeignete copolymere Polycarboxylate sind insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 5000 bis 200000, vorzugsweise 10000 bis 120000 und insbesondere 50000 bis 100000. Vorteilhafterweise werden dabei Handelsprodukte wie Sokalan CP 5(^{R}) oder Alcosperse(^{R}) eingesetzt. Dabei sind Mittel bevorzugt, die das Terpolymer und übliche homo- oder copolymere Acrylate im Gewichtsverhältnis 2:3 bis 3:2 enthalten. Insbesondere sollen die Mittel jedoch nicht mehr als etwa 2 Gew.-% der üblichen homo- oder copolymeren Acrylate enthalten.

Als weitere übliche Inhaltsstoffe enthalten die erfindungsgemäßen Mittel, welche in fester, granularer oder flüssiger bis pastöser Form vorliegen können, insbesondere 10 bis 40 Gew.-% anionische, nichtionische, amphotere und/oder kationische Tenside.

Als anionische Tenside werden beispielsweise solche vom Typ der Sulfonate und Sulfate eingesetzt. Als Tenside vom Sulfonat-Typ kommen vorzugsweise C₉-C₁₃-Alkylbenzolsulfonate, Olefinsulfonate, d.h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht.

Geeignet sind auch Alkansulfonate, die aus C₁₂-C₁₈-Alkanen beispielsweise durch Sulfochlorierung oder Sulfoxidation mit anschließender Hydrolyse bzw. Neutralisation gewonnen werden. Die Sulfonatgruppe ist dabei über die gesamte Kohlenstoffkette statistisch verteilt, wobei die sekundären Alkansulfonate überwiegen.

Geeignet sind auch die Ester von α-Sulfofettsäuren (Estersulfonate), z.B. die α-sulfonierten Methylester der hydrierten Kokos-, Palmkern- oder Talgfettsäuren. Insbesondere kommen Ester von α-Sulfofettsäuren (Estersulfonate), die durch α-Sulfonierung der Methylester von Fettsäuren pflanzlichen und/oder tierischen Ursprungs mit 8 bis 20 C-Atomen im Fettsäuremolekül und nachfolgende Neutralisation zu wasserlöslichen Mono-Salzen hergestellt werden, in Betracht. Vorzugsweise handelt es sich hierbei um die α-sulfonierten Ester der hydrierten Kokos-, Palmkern- oder Talgfettsäuren, wobei auch Sulfonierungsprodukte von ungesättigten Fettsäuren, beispielsweise Ölsäure, in geringen Mengen, vorzugsweise in Mengen nicht oberhalb etwa 2 bis 3 Gew.-%, vorhanden sein können. Insbesondere sind α-Sulfofettsäurealkylester bevorzugt, die eine Alkylkette mit nicht mehr als 4 C-Atomen in der Estergruppe aufweisen, beispielsweise Methylester, Ethylester, Propylester und Butylester. Mit besonderem Vorteil werden die Methylester der α-Sulfofettsäuren (MES) eingesetzt. Weitere geeignete Aniontenside sind die durch Esterspaltung der α-Sulfofettsäurealkylester erhältlichen α-Sulfofettsäuren bzw. ihre Di-Salze. Die Mono-Salze der α-Sulfofettsäurealkylester fallen schon bei ihrer großtechnischen Herstellung als wäßrige Mischung mit begrenzten Mengen an Di-Salzen an. Der Disalz-Gehalt solcher Tenside liegt üblicherweise unter 50 Gew.-% des Aniontensidgemisches, beispielsweise bis etwa 30 Gew.-%. Im Rahmen dieser Erfindung werden die bezüglich der α-Sulfofettsäurealkylester angegebenen Mengen immer als Summe der Mengen des α-Sulfofittsäurealkylester-Monosalzes und des entsprechenden α-Sulfofettsäure-Disalzes verstanden. Auch Mischungen von Mono-Salzen und Di-Salzen mit weiteren Tensiden, beispielsweise mit Alkylbenzolsulfonat, sind bevorzugt.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung durch ein Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure. Geht man dabei von Fetten und Ölen, also natürlichen Gemischen unterschiedlicher Fettsäureglycerinester aus, so ist es erforderlich, die Einsatzprodukte vor der Sulfierung in an sich bekannter Weise mit Wasserstoff weitgehend abzusättigen, d.h. auf Iodzahlen kleiner 5, vorteilhafterweise kleiner 2 zu härten. Typische Beispiele geeigneter Einsatzstoffe sind Palmöl, Palmkernöl, Palmstearin, Olivenöl, Rüböl, Korianderöl, Sonnenblumenöl, Baumwollsaatöl, Erdnußöl, Leinöl, Lardöl oder Schweineschmalz. Aufgrund ihres hohen natürlichen Anteils an gesättigten Fettsäuren hat es sich jedoch als besonders vorteilhaft erwiesen, von Kokosöl, Palmkernöl oder Rindertalg auszugehen. Die Sulfierung der gesättigten Fettsäuren mit 6 bis 22 Kohlenstoffatomen oder der Mischungen aus Fettsäureglycerinestern mit Iodzahlen kleiner 5, die Fettsäuren mit 6 bis 22 Kohlenstoffatomen enthalten, erfolgt vorzugsweise durch Umsetzung mit gasförmigem Schwefeltrioxid und anschließender Neutralisierung mit wäßrigen Basen, wie sie in der internationalen Patentanmeldung W0-A-91/09009 angegeben ist.

Die Sulfierprodukte stellen ein komplexes Gemisch dar, das Mono-, Di- und Triglyceridsulfonate mit α-ständiger und/oder innenständiger Sulfonsäuregruppierung enthält. Als Nebenprodukte bilden sich sulfonierte Fettsäuresalze, Glyceridsulfate, Glycerinsulfate, Glycerin und Seifen. Geht man bei der Sulfierung von gesättigten Fettsäuren oder gehärteten Fettsäureglycerinestergemischen aus, so kann der Anteil der α-sulfonierten Fettsäure-Disalze je nach Verfahrensführung durchaus bis etwa 60 Gew.-% betragen.

Geeignete Tenside vom Sulfat-Typ sind die Schwefelsäuremonoester aus primären Alkoholen natürlichen und synthetischen Ursprungs, insbesondere aus Fettalkoholen, z.B. aus Kokosfettalkohol, Talgfettalkohol, Oleylalkohol, Lauryl-, Myristyl-, Cetyl- oder Stearylalkohol, oder aus den C₁₀-C₂₀-Oxoalkoholen, und diejenigen Halbester sekundärer Alkohole dieser Kettenlänge. Insbesondere sind dabei die aus Kokosöl, Palm- und Palmkernöl gewonnenen Fettalkoholgemische, die zusätzlich noch Anteile an ungesättigten Alkoholen, z.B. an Oleylalkohol, enthalten können, bevorzugt. Auch die Schwefelsäuremonoester der mit 1 bis 6 Mol Ethylenoxid ethoxylierten Alkohole, wie 2-Methyl-verzweigte C₉-C₁₁-Alkohole mit im Durchschnitt 3,5 Mol Ethylenoxid, sind geeignet.

Weitere bevorzugte Aniontenside sind die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈- bis C₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Bevorzugte Aniontensid-Mischungen enthalten Kombinationen aus Fettalkoholsulfaten, sulfierten Fettsäureglycerinestern, Alkylbenzolsulfonaten, α-Sulfofettsäuremethylestern und/oder Sulfosuccinaten. Insbesondere sind hierbei Mischungen bevorzugt, die als anionische Tenside Fettalkoholsulfate, insbesondere Mischungen aus kurzkettigen gesättigten C₁₂-C₁₈-Fettalkoholsulfaten mit geringen Anteilen an C₁₈ und ungesättigte Fettalkoholsulfate, insbesondere Oleylsulfat, sowie Mischungen aus Fettalkoholsulfaten und sulfierten Fettsäureglycerinestern, Fettalkoholsulfaten und Alkylbenzolsulfonaten, Fettalkoholsulfaten und Sulfosuccinaten oder Alkylbenzolsulfonate und Sulfosuccinate in jedem beliebigen Verhältnis enthalten.

Als weitere Inhaltsstoffe kommen Seifen in Betracht. Geeignet sind gesättigte Fettsäureseifen, wie die Salze der Laurinsäure, Myristinsäure, Palmitinsäure oder Stearinsäure, sowie insbesondere aus natürlichen Fettsäuren, z.B. Kokos-, Palmkern- oder Talgfettsäuren, abgeleitete Seifengemische. Insbesondere sind solche Seifengemische bevorzugt, die zu 50 bis 100 Gew.-% aus gesättigten C₁₂-C₁₈-Fettsäureseifen und zu 0 bis 50 Gew.-% aus Ölsäureseife zusammengesetzt sind.

Die anionischen Tenside sowie die Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Als nichtionische Tenside dienen vorzugsweise alkoxylierte, insbesondere ethoxylierte Alkohole, die sich von primären Alkoholen mit vorzugsweise 9 bis 18 Kohlenstoffatomen und durchschnittlich 1 bis 12 Mol Ethylenoxid (EO) ableiten, in denen der Alkoholrest linear oder in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch lineare Reste aus Alkoholen nativen Ursprungs mit 12 bis 18 Kohlenstoffatomen bevorzugt, wie z.B. aus Kokos-, Talgfett- oder Oleylalkohol. Insbesondere sind Alkoholethoxylate bevorzugt, die durchschnittlich 2 bis 8 E0 aufweisen. Zu den bevorzugten nichtionischen Tensiden gehören ethoxylierte Fettalkohole wie C₁₂-C₁₄-Alkohole mit 3 E0 oder 4 E0, C₉-C₁₁-Alkohol mit 7 E0, C₁₃-C₁₅-Alkohole mit 3 E0, 5 E0, 7 E0 oder 8 E0, C₁₂-C₁₈-Alkohole mit 3 E0, 5 E0 oder 7 E0 und Mischungen aus diesen, wie Mischungen aus C₁₂-C₁₄-Alkohol mit 3 E0 und C₁₂-C₁₈-Alkohol mit 5 E0. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE).

Außerdem können als weitere nichtionische Tenside auch Alkylglykoside der allgemeinen Formel R0(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionischen Tensid oder in Kombination mit anderen nichtionischen Tenside, insbesondere zusammen mit alkoxylierten Fettalkoholen, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217 598 beschrieben sind oder die vorzugsweise nach dem in der internationalen Patentanmeldung WO-A-90/13533 beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (II), 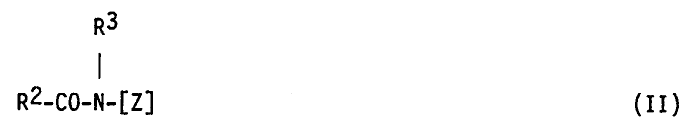 in der R²C0 für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Vorzugsweise leiten sich die Polyhydroxyfettsäureamide von Zuckern mit 5 oder 6 Kohlenstoffatomen ab. Die bevorzugten Polyhydroxyfettsäureamide stellen daher Fettsäure-N-alkylglucamide dar.

Vorzugsweise enthalten die Mittel 15 bis 35 Gew.-% anionische und nichtionische Tenside, wobei die Gewichtsverhältnisse zwischen den anionischen und nichtionischen Tensiden im allgemeinen zwischen 10:1 und 1:5 liegen.

Außerdem können die erfindungsgemäßen Wasch- oder Reinigungsmittel etwa 15 bis 45 Gew.-% weitere übliche Inhaltsstoffe von Wasch- oder Reinigungsmitteln enthalten. Hierzu gehören beispielsweise Vergrauungsinhibitoren (Schmutzträger), Schauminhibitoren, Bleichmittel und Bleichaktivatoren, optische Aufheller, Enzyme, textilweichmachende Stoffe, Farb- und Duftstoffe sowie Neutralsalze.

Unter den als Bleichmittel dienenden, in Wasser H₂0₂ liefernden Verbindungen haben das Natriumperborat-tetrahydrat und das Natriumperborat-monohydrat besondere Bedeutung. Weitere brauchbare Bleichmittel sind beispielsweise Peroxycarbonat, Peroxypyrophosphate, Citratperhydrate sowie H₂0₂ liefernde persaure Salze oder Persäuren, wie Perbenzoate, Peroxophthalate, Diperazelainsäure oder Diperdodecandisäure. Der Gehalt der Mittel an Bleichmitteln beträgt vorzugsweise 5 bis 25 Gew.-% und insbesondere 10 bis 20 Gew.-%, wobei vorteilhafterweise Perboratmonohydrat eingesetzt wird.

Um beim Waschen bei Temperaturen von 60 °C und darunter eine verbesserte Bleichwirkung zu erreichen, können Bleichaktivatoren in die Präparate eingearbeitet werden. Beispiele hierfür sind mit H₂0₂ organische Persäuren bildende N-Acyl- beziehungsweise 0-Acyl-Verbindungen, vorzugsweise N,N'-tetraacylierte Diamine, wie N,N,N',N'-Tetraacetylethylendiamin, ferner Carbonsäureanhydride und Ester von Polyolen wie Glucosepentaacetat. Weitere bekannte Bleichaktivatoren sind acetylierte Mischungen aus Sorbitol und Mannitol, wie sie beispielsweise in der europäischen Patentanmeldung EP-A-0 525 239 beschrieben werden. Der Gehalt der bleichmittelhaltigen Mittel an Bleichaktivator liegt in dem üblichen Bereich, vorzugsweise zwischen 1 und 10 Gew.-% und insbesondere zwischen 3 und 8 Gew.-%.

Vergrauungsinhibitoren haben die Aufgabe, den von der Faser abgelösten Schmutz in der Flotte suspendiert zu halten und so das Vergrauen zu verhindern. Hierzu sind wasserlösliche Kolloide meist organischer Natur geeignet, wie beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die oben genannten Stärkeprodukte verwenden, zum Beispiel abgebaute Stärke, Aldehydstärken usw.. Auch Polyvinylpyrrolidon ist brauchbar. Vorzugsweise werden Carboxymethylcellulose (Na-Salz), Methylcellulose, Hydroxyalkylcellulose und Mischether wie Methylhydroxyethylcellulose, Methylhydroxypropylcellulose und deren Gemische sowie Polyvinylpyrrolidon, insbesondere in Mengen von 0,1 bis 5 Gew.-%, bezogen auf das Mittel, eingesetzt.

Das Schäumvermögen der Tenside läßt sich durch Kombination geeigneter Tensidtypen steigern oder verringern; eine Verringerung läßt sich ebenfalls durch Zusätze nichttensidartiger organischer Substanzen erreichen. Ein verringertes Schäumvermögen, das beim Arbeiten in Maschinen erwünscht ist, erreicht man vielfach durch Kombination verschiedener Tensidtypen, zum Beispiel von Sulfaten und/oder Sulfonaten mit nichtionischen Tensiden und/oder mit Seifen. Bei Seifen steigt die schaumdämpfende Wirkung mit dem Sättigungsgrad und der C-Zahl des Fettsäureesters an. Als schauminhibierende Seifen eignen sich daher solche Seifen natürlicher und synthetischer Herkunft, die einen hohen Anteil an C₁₈-C₂₄-Fettsäuren aufweisen. Geeignete nichttensidartige Schauminhibitoren sind Organopolysiloxane und deren Gemische mit mikrofeiner, gegebenenfalls silanierter Kieselsäure, Paraffine, Wachse, Mikrokristallinwachse und deren Gemische mit silanierter Kieselsäure oder Bistearylethylendiamid. Mit Vorteil werden auch Gemische verschiedener Schauminhibitoren verwendet, zum Beispiel solche aus Silikonen und Paraffinen oder Wachsen. Vorzugsweise sind die Schauminhibitoren an eine granulare, in Wasser lösliche beziehungsweise dispergierbare Trägersubstanz gebunden. Insbesondere sind dabei Mischungen aus Paraffinen und Bistearylethylendiamiden bevorzugt.

Die Waschmittel können als optische Aufheller Derivate der Diaminostilbendisulfonsäure beziehungsweise deren Alkalimetallsalze enthalten. Geeignet sind zum Beispiel Salze der 4,4'-Bis(2-anilino-4-morpholino-1,3,5-triazin-6-yl-amino)-stilben-2,2'-disulfonsäure oder gleichartig aufgebaute Verbindungen, die anstelle der Morpholinogruppe eine Diethanolaminogruppe, eine Methylaminogruppe, eine Anilinogruppe oder eine 2-Methoxyethylaminogruppe tragen. Weiterhin können Aufheller vom Typ des substituierten 4,4'-Distyryl-di-phenyls anwesend sein; zum Beispiel die Verbindung 4,4'-Bis(4-chlor-3-sulfostyryl)-diphenyl. Auch Gemische der vorgenannten Aufheller können verwendet werden.

Nach einer weiteren bevorzugten Ausführungsform der Erfindung werden einheitlich weiße Granulate erhalten, wenn die Mittel außer den üblichen optischen Aufhellern in üblichen Mengen, beispielsweise zwischen 0,1 und 0,5, vorzugsweise um 0,1 bis 0,3 Gew.-%, auch geringe Mengen, beispielsweise 10⁻⁶ bis 10⁻³ Gew.-%, vorzugsweise um 10⁻⁵ Gew.-%, eines blauen Farbstoffs enthält. Ein besonders bevorzugter Farbstoff ist Tinolux (R) (Produktname der Ciba-Geigy).

Als Enzyme kommen solche aus der Klasse der Proteasen, Lipasen, Amylasen, Cellulasen bzw. deren Gemische in Frage. Besonders gut geeignet sind aus Bakterienstämmen oder Pilzen, wie Bacillus subtilis, Bacillus licheniformis und Streptomyces griseus gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase oder Protease und Cellulase oder aus Cellulase und Lipase oder aus Protease, Amylase und Lipase oder Protease, Lipase und Cellulase, insbesondere jedoch Cellulase-haltige Mischungen von besonderem Interesse. Auch Peroxidasen und Oxidasen haben sich in einigen Fällen als geeignet erwiesen. Die Enzyme können an Trägerstoffen adsorbiert und/oder in Hüllsubstanzen eingebettet sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,1 bis etwa 2 Gew.-% betragen.

Als Stabilisatoren insbesondere für Perverbindungen und Enzyme kommen die Salze von Polyphosphonsäuren, insbesondere 1-Hydroxyethan-1,1-diphosphonsäure (HEDP) in Betracht.

Möglich ist auch der Einsatz von Proteasen, die mit löslichen Calciumsalzen und einem Calciumgehalt von vorzugsweise etwa 1,2-Gew.-%, bezogen auf das Enzym, stabilisiert sind. Besonders vorteilhaft ist jedoch der Einsatz von Borverbindungen, beispielsweise von Borsäure, Boroxid, Borax und anderen Alkalimetallboraten wie den Salzen der Orthoborsäure (H₃B0₃), der Metaborsäure (HB0₂) und der Pyroborsäure (Tetraborsäure H₂B₄0₇).

Die vorzugsweise pulverförmigen bis granularen Mittel weisen im allgemeinen ein Schüttgewicht zwischen 300 und 1200 g/l, vorzugsweise von 500 bis 1100 g/l und insbesondere von oberhalb 600 g/l auf. Insbesondere Mittel mit Schüttgewichten oberhalb 500 g/l können außerdem Bestandteile enthalten, welche die Löslichkeit der verdichteten Granulate verbessern. Derartige Bestandteile werden beispielsweise in den älteren deutschen Patentanmeldungen DE-A-41 24 701 und DE-A-42 03 031 beschrieben. Zu den bevorzugt eingesetzten Bestandteilen gehören insbesondere Fettalkohole mit 20 bis 80 Mol Ethylenoxid pro Mol Fettalkohol, beispielsweise Talgfettalkohol mit 30 E0 und Talgfettalkohol mit 40 E0, aber auch Fettalkohole mit 14 E0 sowie Polyethylenglykole mit einer relativen Molekülmasse zwischen 200 und 2000.

Die Mittel lassen sich durch die bekannten Herstellungsverfahren wie Sprühtrocknung, Misch-, Granulier- und/oder Extrudierverfahren herstellen. Dabei ist es auch möglich, daß eine Gerüststoffkombination, die ein Terpolymer aus den Monomeren einer monoethylenisch ungesättigten C₃-C₈-Carbonsäure, einer 2-Alkyl-allylsulfonsäure oder 2-Aryl-allylsulfonsäure und einem Kohlenhydrat und/oder den Salzen einer monoethylenisch ungesättigten C₃-C₈-Carbonsäure und einer 2-Alkylallylsulfonsäure oder 2-Aryl-allylsulfonsäure sowie einem Kohlenhydrat enthält, in Form eines Compounds als Zumischkomponente zu anderen granularen Bestandteilen von Wasch- oder Reinigungsmitteln eingesetzt wird. Diese Gerüststoffkombination kann ebenfalls durch Mischen, Granulieren, Extrudieren und/oder durch Sprühtrocknung hergestellt werden, wobei granulierte oder extrudierte Compounds bevorzugt sind.

Derartige Gerüststoffkombinationen sind ebenfalls Gegenstand der Erfindung. Sie enthalten als copolymere Polycarbonsäure und/oder als copolymeres Polycarboxylat ein Terpolymer aus den Monomeren und einer monoethylenisch ungesättigten C₃-C₈-Carbonsäure, einer 2-Alkyl-allylsulfonsäure oder 2-Aryl-allylsulfonsäure und einem Kohlenhydrat und/oder den Salzen einer monoethylenisch ungesättigen C₃-C₈-Carbonsäure und einer 2-Alkyl-allylsulfonsäure oder 2-Aryl-allylsulfonsäure sowie einem Kohlenhydrat enthält, wobei ein Terpolymer aus den Salzen der Säuren und einem Kohlenhydrat bevorzugt ist. Bevorzugte Gerüststoffkombinationen enthalten ein Terpolymer, das zu 40 bis 60 Gew.-% aus (Meth)acrylsäure bzw. (Meth)acrylat, vorzugsweise Acrylsäure bzw. Acrylat, zu 10 bis 30 Gew.-%, vorzugsweise 15 bis 25 Gew.-% aus Methallylsulfonsäure bzw. Methallylsulfonat und zu 15 bis 40 Gew.-%, vorzugsweise 20 bis 40 Gew.-% aus einem Kohlenhydrat, vorzugsweise Saccharose, besteht.

In einer weiteren bevorzugten Ausführungsform enthalten die Gerüststoffkombinationen 50 bis 70 Gew.-%, vorzugsweise 55 bis 65 Gew.-% Zeolith und/oder kristalline Schichtsilikate, insbesondere Zeolith oder Zeolith und kristalline Schichtsilikate im Gewichtsverhältnis 1:1 oder darüber, und 1 bis 30 Gew.-% Terpolymer.

Ebenfalls bevorzugt sind Gerüststoffkombinationen, welche 5 bis 30 Gew.-%, vorzugsweise 5 bis 25 Gew.-% Natriumcarbonat, 0 bis 10 Gew.-%, vorzugsweise 2 bis 8 Gew.-% amorphe Silikate, 0 bis 8 Gew.-%, vorzugsweise 0,5 bis 5 Gew.-% und insbesondere bis 2 Gew.-% übliche (co-)polymere Acrylate und 0 bis 25 Gew.-%, vorzugsweise 2 bis 20 Gew.-% und insbesondere 5 bis 20 Gew.-% Salze organischer Polycarbonsäuren enthalten.

Die Gerüststoffkombinationen können auch zusätzlich flüssige bis wachsartige Komponenten, vorzugsweise nichtionische Tenside, enthalten. Derartige Gerüststoffkombinationen werden vorzugsweise durch Aufbereitung einer Gerüststoffkombination hergestellt, indem diese mit den flüssigen bis wachsartigen Komponenten, insbesondere mit nichtionischen Tensiden, besprüht wird.

### Beispiele

Es wurden granulare Waschmittel nachstehender Zusammensetzung (erfindungsgemäßes Mittel M1 sowie Vergleichsbeispiel V1) in herkömmlicher Weise durch Sprühtrocknung hergestellt und getestet. Dabei wurden das Terpolymer, das aus 50 Gew.-% Acrylsäure, 33 Gew.-% Saccharose und 17 Gew.-% 2-Methallylsulfonsäure gemäß der Offenbarung der älteren deutschen Patentanmeldung P 42 21 381.9 hergestellt und anschließend vollständig neutralisiert worden war, in M1 bzw. das polymere Polycarboxylat aus einem Acrylat-Maleat-Copolymer (Sokalan CP5(^{R}), Handelsprodukt der BASF, Bundesrepublik Deutschland) in V1 sowie Perborat, Tetraacetylethylendiamin (TAED), das Enzymgranulat, enthaltend Protease und Lipase, und das Entschäumergranulat auf Basis von Paraffinöl zu dem ansonsten sprühgetrockneten Produkt hinzugemischt.

| Zusammensetzung | (in Gew.-%) |
|---|---|
| C₉-C₁₃-Alkylbenzolsulfonat-natriumsalz | 9 |
| Talgfettalkoholsulfat | 4 |
| C₁₂-C₁₈-Fettalkohol mit 5 EO | 4,3 |
| Talgfettalkohol mit 5 EO | 1,8 |
| C₁₂-C₁₈-Fettsäureseife-natriumsalz | 0,8 |
| Zeolith (wasserfreie Aktivsubstanz) | 23,5 |
| Natriumcarbonat | 12,6 |
| Natriumsilikat (Na₂0 : Si0₂ 1 : 2) | 3 |
| Perboratmonohydrat | 16 |
| TAED | 5,5 |
| Carboxymethylcellulose/Methylcellulose | 0,25 |
| Enzymgranulat | 1 |
| Entschäumergranulat | 0,2 |
| optischer Aufheller | 0,2 |
| Wasser | 11 |
| Salze aus Rohstoffen | Rest |
| Terpolymer bzw. Sokalan CP 5(^{R}) | 5,5 |

Die Prüfung erfolgte unter praxisnahen Bedingungen in Haushaltswaschmaschinen. Hierzu wurden die Maschinen mit 3,5 kg sauberer Füllwäsche und 0,5 kg Testgewebe beschickt, wobei das Testgewebe zum Teil mit üblichen Testanschmutzungen zur Prüfung des Primärwaschvermögens imprägniert war und zum Teil zur Prüfung des Sekundärwaschvermögens aus weißem Gewebe bestand. Als Testgewebe wurden Streifen aus standardisiertem Baumwollgewebe (Wäschereiforschungsanstalt Krefeld, WFK), Wirkware (Baumwolltrikot, B), Nessel (BN) und Frottiergewebe (FT) verwendet.
- Waschbedingungen:: Leitungswasser von 23 °d (äquivalent zu 230 mg Ca0/l), eingesetzte Waschmittelmenge pro Mittel und Maschine 98 g,
Waschtemperatur 25 bis 90 °C (Aufheizzeit 60 Minuten, 15 Minuten bei 90 °C),
Flottenverhältnis (kg Wäsche : Liter Waschlauge im Hauptwaschgang) 1:5,7,
4maliges Nachspülen mit Leitungswasser, Abschleudern, Trocknen.

Die Primärwaschleistungen der Mittel M1 und V1 waren erwartungsgemäß vergleichbar.

Nach 25 Waschzyklen wurde der Aschegehalt der Textilproben quantitativ bestimmt. Das erfindungsgemäße Mittel M1 zeigte im Durchschnitt über alle Gewebe gegenüber V1 vergleichbare Ergebnisse.

## Patentansprüche

1. Wasch- oder Reinigungsmittel, insbesondere ein Textilwaschmittel, enthaltend (co-)polymere Polycarbonsäuren und/oder Polycarboxylate, dadurch gekennzeichnet, daß es als copolymere Polycarbonsäure und/oder copolymeres Polycarboxylat ein Terpolymer aus den Monomeren einer monoethylenisch ungesättigten C₃-C₈-Carbonsäure und einer 2-Alkylallylsulfonsäure oder 2-Aryl-allylsulfonsäure sowie einem Kohlenhydrat und/oder den Salzen einer monoethylenisch ungesättigten C₃-C₈-Carbonsäure und einer 2-Alkyl-allylsulfonsäure oder 2-Aryl-allylsulfonsäure sowie einem Kohlenhydrat und außerdem Enzyme enthält.

2. Mittel nach Anspruch 1, dadurch gekennzeichnet, daß das Terpolymer zu 40 bis 60 Gew.-%, vorzugsweise 45 bis 55 Gew.-% aus (Meth)acrylsäure bzw. (Meth)acrylat, vorzugsweise Acrylsäure bzw. Acrylat, zu 10 bis 30 Gew.-%, vorzugsweise 15 bis 25 Gew.-% aus Methallylsulfonsäure bzw. Methallylsulfonat und zu 15 bis 40 Gew.-%, vorzugsweise 20 bis 40 Gew.-% aus einem Kohlenhydrat, vorzugsweise Saccharose, besteht, wobei ein Terpolymer aus den Salzen der Säuren und einem Kohlenhydrat bevorzugt ist.

3. Mittel nach Anspruch 1 oder 2, dadurch gekennzeichnet, daß es 0,5 bis 30 Gew.-%, vorzugsweise 2 bis 25 Gew.-% Terpolymer, 0 bis 20 Gew.-%, vorzugsweise 5 bis 15 Gew.-% anorganische Carbonate und 0 bis 20 Gew.-%, vorzugsweise 5 bis 15 Gew.-% Salze organischer Polycarbonsäuren enthält.

4. Mittel nach einem der Ansprüche 1 bis 3, dadurch gekennzeichnet, daß es als Buildersubstanzen 10 bis 65 Gew.-% wasserhaltigen Zeolith und/ oder kristalline Schichtsilikate und 2 bis 20 Gew.-% Terpolymer aus den Salzen der Acrylsäure und der 2-Methallylsulfonsäure sowie Saccharose enthält.

5. Mittel nach Anspruch 4, dadurch gekennzeichnet, daß es 20 bis 40 Gew.-% Zeolith und/oder kristalline Schichtsilikate, 5 bis 15 Gew.-% Natriumcarbonat, 0 bis 10 Gew.-% amorphe Silikate und 3 bis 15 Gew.-% Terpolymer enthält.

6. Mittel nach einem der Ansprüche 1 bis 5, dadurch gekennzeichnet, daß es Terpolymer und übliche homo- oder copolymere Acrylate im Gewichtsverhältnis 2:3 bis 3:2 enthält.

7. Mittel nach einem der Ansprüche 1 bis 6, dadurch gekennzeichnet, daß es Terpolymer und Salze organischer Polycarbonsäuren im Verhältnis 1:4 bis 4:1 enthält.

8. Mittel nach einem der Ansprüche 1 bis 7, dadurch gekennzeichnet, daß es 10 bis 40 Gew.-% Tenside sowie 15 bis 45 Gew.-% weitere übliche Inhaltsstoffe von Wasch- oder Reinigungsmitteln enthält und ein Schüttgewicht von 300 bis 1200 g/l, vorzugsweise von 500 bis 1100 g/l und insbesondere von oberhalb 600 g/l aufweist.

9. Verfahren zur Herstellung eines Wasch- oder Reinigungsmittels, insbesondere eines Textilwaschmittels, nach einem der Ansprüche 1 bis 8, dadurch gekennzeichnet, daß das Granulat durch Sprühtrocknung hergestellt wird.

10. Verfahren zur Herstellung eines Wasch- oder Reinigungsmittels, insbesondere eines Textilwaschmittels, nach einem der Ansprüche 1 bis 8, dadurch gekennzeichnet, daß das Granulat durch ein Misch-, Granulier-und/oder Extrudierverfahren hergestellt wird.

11. Verfahren zur Herstellung eines Wasch- oder Reinigungsmittels, insbesondere eines Textilwaschmittels, nach einem der Ansprüche 1 bis 8, dadurch gekennzeichnet, daß eine Gerüststoffkombination, die ein Terpolymer aus den Monomeren einer monoethylenisch ungesättigten C₃-C₈-Carbonsäure, einer 2-Alkyl-allylsulfonsäure oder 2-Aryl-allylsulfonsäure und einem Kohlenhydrat und/oder den Salzen einer monoethylenisch unggesättigten C₃-C₈-Carbonsäure und einer 2-Alkyl-allylsulfonsäure oder 2-Aryl-allylsulfonsäure sowie einem Kohlenhydrat enthält, in Form eines sprühgetrockneten, granulierten oder extrudierten Compounds als Zumischkomponente zu anderen granularen Bestandteilen von Wasch- oder Reinigungsmitteln eingesetzt wird, wobei der Einsatz von granulierten oder extrudierten Compounds bevorzugt ist.

## Claims

1. A detergent or cleaning composition, more particularly a laundry detergent, containing (co)polymeric polycarboxylic acids and/or polycarboxylates, characterized in that it contains a terpolymer of the monomers of a monoethylenically unsaturated C₃₋₈ carboxylic acid and a 2-alkyl allylsulfonic acid or 2-aryl allylsulfonic acid and a carbohydrate and/or the salts of a monoethylenically unsaturated C₃₋₈ carboxylic acid and of a 2-alkyl allylsulfonic acid or 2-aryl allylsulfonic acid and a carbohydrate and, in addition, enzymes as the copolymeric polycarboxylic acid and/or copolymeric polycarboxylate.

2. A detergent or cleaning composition as claimed in claim 1, characterized in that 40 to 60% by weight and preferably 45 to 55% by weight of the terpolymer consists of (meth)acrylic acid or (meth)acrylate, preferably acrylic acid or acrylate, 10 to 30% by weight and preferably 15 to 25% by weight of methallylsulfonic acid or methallyl sulfonate and 15 to 40% by weight and preferably 20 to 40% by weight of a carbohydrate, preferably sucrose, a terpolymer of the salts of the acids and a carbohydrate being preferred.

3. A detergent or cleaning composition as claimed in claim 1 or 2, characterized in that it contains 0.5 to 30% by weight and preferably 2 to 25% by weight of terpolymer, 0 to 20% by weight and preferably 5 to 15% by weight of inorganic carbonates and 0 to 20% by weight and preferably 5 to 15% by weight of salts of organic polycarboxylic acids.

4. A detergent or cleaning composition as claimed in any of claims 1 to 3, characterized in that it contains 10 to 65% by weight of water-containing zeolite and/or crystalline layer silicates and 2 to 20% by weight of terpolymer of the salts of acrylic acid and of 2-methallylsulfonic acid and sucrose as builders.

5. A detergent or cleaning composition as claimed in claim 4, characterized in that it contains 20 to 40% by weight of zeolite and/or crystalline layer silicates, 5 to 15% by weight of sodium carbonate, 0 to 10% by weight of amorphous silicates and 3 to 15% by weight of terpolymer.

6. A detergent or cleaning composition as claimed in any of claims 1 to 5, characterized in that it contains terpolymer and typical homopolymeric or copolymeric acrylates in a ratio by weight of 2:3 to 3:2.

7. A detergent or cleaning composition as claimed in any of claims 1 to 6, characterized in that it contains terpolymer and salts of organic polycarboxylic acids in a ratio of 1:4 to 4:1.

8. A detergent or cleaning composition as claimed in any of claims 1 to 7, characterized in that it contains 10 to 40% by weight of surfactants and 15 to 45% by weight of other typical ingredients of detergents or cleaning compositions and has an apparent density of 300 to 1200 g/l, preferably 500 to 1100 g/l and, more preferably, above 600 g/l.

9. A process for the production of the detergent or cleaning composition, more particularly the laundry detergent, claimed in any of claims 1 to 8, characterized in that the granules are produced by spray-drying.

10. A process for the production of the detergent or cleaning composition, more particularly the laundry detergent, claimed in any of claims 1 to 8, characterized in that the granules are produced by mixing, granulation and/or extrusion.

11. A process for the production of the detergent or cleaning composition, more particularly the laundry detergent, claimed in any of claims 1 to 8, characterized in that a builder combination - containing a terpolymer of the monomers of a monoethylenically unsaturated C₃₋₈ carboxylic acid and a 2-alkyl allylsulfonic acid or 2-aryl allylsulfonic acid and a carbohydrate and/or the salts of a monoethylenically unsaturated C₃₋₈ carboxylic acid and of a 2-alkyl allylsulfonic acid or 2-aryl allylsulfonic acid and a carbohydrate - is used in the form of a spray-dried, granulated or extruded compound designed for addition to other granular components of detergents or cleaning compositions, granulated or extruded compounds preferably being used.

## Revendications

1. Détergent ou nettoyant, en particulier détergent pour textiles, contenant des acides polycarboxyliques et/ou des polycarboxylates (co-)polymériques,
caractérisé en ce qu'
il contient comme acide polycarboxylique copolymérique et/ou polycarboxylates copolymérique un terpolymère obtenu à partir des monomères d'un acide carboxylique C₃-C₈ monoéthyléniquement insaturé et d'un acide 2-alkylallyl-sulfonique ou d'un acide 2-arylallylsulfonique ainsi que d'un carbohydrate et/ou des sels d'un acide carboxylique C₃-C₈ monoéthyléniquement insaturé et d'un acide 2-alkylallyl-sulfonique ou d'un acide 2-arylallylsulfonique, ainsi que d'un carbohydrate et de plus des enzymes.

2. Produit selon la revendication 1,
caractérisé en ce que
le terpolymère est composé à 40 jusqu'à 60 % en poids, de préférence à 45 jusqu'à 55 % en poids d'acide (méth)acrylique ou de (méth)acrylate, de préférence d'acide acrylique ou d'acrylate, à 10 jusqu'à 30 % en poids, de préférence à 15 jusqu'à 25 % en poids d'acide méthallylsulfonique ou de méthallylsulfonate et à 15 jusqu'à 40 % en poids, de préférence à 20 jusqu'à 40 % en poids d'un carbohydrate, de préférence de saccharose, où un terpolymère à partir des sels des acides et d'un carbohydrate est préférentiel.

3. Produit selon la revendication 1 ou 2,
caractérisé en ce qu'
il contient 0,5 jusqu'à 30 % en poids, de préférence 2 jusqu'à 25 % en poids de terpolymère, 0 jusqu'à 20 % en poids, de préférence 2 jusqu'à 25 % en poids de carbonates organiques et 0 jusqu'à 20 % en poids, de préférence 5 jusqu'à 15 % en poids de sels d'acides polycarboxyliques organiques.

4. Produit selon une des revendications 1 à 3,
caractérisé en ce qu'
il contient comme adjuvant 10 jusqu'à 65 % en poids de zéolithes contenant de l'eau et/ou des phyllosilicates cristallins et 2 jusqu'à 20 % en poids de terpolymère obtenu à partir des sels de l'acide acrylique et de l'acide 2-méthallylsulfonique ainsi que du saccharose.

5. Produit selon la revendication 4,
caractérisé en ce qu'
il contient 20 jusqu'à 40 % en poids de zéolithe et/ou de phyllosilicates cristallins, 5 jusqu'à 15 % en poids de carbonate de sodium, 0 jusqu'à 10 % en poids de silicates amorphes et 3 jusqu'à 15 % en poids de terpolymère.

6. Produit selon une des revendications 1 à 5,
caractérisé en ce qu'
il contient du terpolymère et des acrylates homo- ou copolymériques habituels en rapport de poids de 2 : 3 jusqu'à 3 : 2.

7. Produit selon une des revendications 1 à 6,
caractérisé en ce qu'
il contient du terpolymère et des sels d'acides polycarboxyliques organiques en rapport 1 : 4 jusqu'à 4 : 1.

8. Produit selon une des revendications 1 à 7,
caractérisé en ce qu'
il contient 10 jusqu'à 40 % en poids de tensioactifs ainsi que 15 jusqu'à 45 % en poids d'autres ingrédients de produits détergents ou nettoyants et qu'il présente une densité apparente comprise entre 300 et 1200 g/l, de préférence entre 500 et 1100 g/l et en particulier supérieur à 600 g/1.

9. Procédé de fabrication d'un produit détergent ou nettoyant, en particulier d'un produit détergent pour textiles, selon une des revendications 1 à 8,
caractérisé en ce que
le granulat est fabriqué au moyen de séchage par pulvérisation.

10. Procédé de fabrication d'un produit détergent ou nettoyant, en particulier d'un produit détergent pour textiles, selon une des revendications 1 à 8,
caractérisé en ce que
le granulat est fabriqué au moyen de procédés de mélange, de granulation et/ou d'extrusion.

11. Procédé de fabrication d'un produit détergent ou nettoyant, en particulier d'un produit détergent pour textiles, selon une des revendications 1 à 8,
caractérisé en ce que
la mise en oeuvre d'une combinaison d'adjuvant contenant un terpolymère obtenu à partir des monomères d'un acide carboxylique C₃-C₈ monoéthyléniquement insaturé, d'un acide 2-alkylallyl-sulfonique ou d'un acide 2-arylallylsulfonique et d'un carbohydrate et/ou des sels d'un acide carboxylique C₃-C₈ monoéthyléniquement insaturé et d'un acide 2-alkylallyl-sulfonique ou d'un acide 2-arylallylsulfonique ainsi que d'un carbohydrate, sous forme d'un compound séché par pulvérisation, granulé ou extrudé comme composant d'addition aux autres constituants granuleux de produits détergents ou nettoyants, où la mise en oeuvre de compounds granulés ou extrudés est favorisée.
